# EUROPEAN PATENT SPECIFICATION

(11) **EP 4 368 147 B1**
(45) Date of publication and mention of the grant of the patent: **23.10.2024**
(21) Application number: 23150446.5
(22) Date of filing: 05.01.2023
(51) Int. Cl.: A61C 17/22

(54) **PERSONAL CARE DEVICE**
KÖRPERPFLEGEVORRICHTUNG
DISPOSITIF DE SOINS PERSONNELS

(30) Priority: 08.11.2022 CN 202222961084 U
(43) Date of publication of application: 15.05.2024
(73) Proprietor: SHENZHEN SOOCAS TECHNOLOGY CO., LTD., Shenzhen, Guangdong 518000 (CN)
(72) Inventor: MIN, Pengbo, Guangdong (CN)
(74) Representative: Vossius & Partner Patentanwälte Rechtsanwälte mbB

(56) References cited:
- DE-A1- 2 905 035
- DE-C1- 4 411 054
- US-A1- 2021 315 675

## Description

### TECHNICAL FIELD

The present invention relates to the field of personal care devices, specifically, relates to a personal care device.

### BACKGROUND

In relevant art, personal care components include a shaft core component and a handle component, and waterproof of the shaft core component and the handle component can be realized by setting a rubber sleeve on the shaft core of the shaft core component, but the waterproof effect is poor and when the device body falls and cracks it is easy to cause waterproof failure.

Therefore, how to improve the waterproof effect of personal care components has become an urgent problem to be solved.

US 2021/ 315675A1 discloses a unit for a handle of personal-care implement and personal-care implement, the light indication and sealing element comprising a ring structure and an elastic circular section, the ring structure being connected to the housing at the proximal end by two flexure hinges thereby creating a circular gap between the ring structure and the housing, the circular gap being filled with a transparent and/or translucent soft elastomeric material, the transparent and/or translucent soft elastomeric material forming the elastic circular section to seal the ring structure and the housing in a substantially water-tight manner.

DE 44 11 054 C1 discloses an electrical tooth-brush with fluid sealing, such as a toothbrush, has a main housing with an electrical motor within the base, the drive shaft of the motor extends into the stem, the internal region of the base is protected from the ingress of any liquid by a seal. This has double lip sealing surfaces that engage the driveshaft, and a further lip sealing edge engages the housing, this has a double function of preventing entry of liquid, while allowing pressurised gas build up in the motor housing to be released to the outer region.

DE 29 05 035 A1 discloses a fluid coupling for dental drill, where the coupling is for a feed pipe of a drive and coolant medium, as used in fluid for a dental drill and comprises an outer body into which an inner body tightly projects, the inner body has, in the direction of its inner end, a diameter which gradually becomes smaller, and seats are provided for sealing rings, and a groove for a sprung securing ring is located in an inner ring groove of the outer body, the coupling is especially for a turbine driven drill, both the outer body and the inner have central channels.

### SUMMARY

The present invention is set out in the appended set of claims. The present invention aims to solve at least one of the technical problems existing in the prior art or related art.

Therefore, the present invention provides a personal care device.

The technical solution of the present invention provides a personal care device, including: a handle assembly configured for holding, and the handle assembly includes a handle barrel and a top light ring, where the handle barrel has a main extension line extending along an axial direction of the handle assembly, and a first end and a second end provided opposite to each other, the main extension line extends from the first end to the second end; the top light ring is provided with a clamping part, the top light ring is clamped with the first end through the clamping part, and a part of the top light ring extends into the handle barrel from the first end; a first seal is provided between the handle barrel and the top light ring and is configured to seal a gap between the top light ring and the handle barrel.

The personal care device provided according to the present invention include a handle assembly, the handle assembly includes a handle barrel and a top light ring, the handle barrel has a main extension line extending along an axial direction of the handle assembly and a first end and a second end provided opposite to each other, the main extension line extends from the first end of the handle barrel to the second end of the handle barrel, where the top light ring is clamped at the first end of the handle barrel, a first seal is provided between the handle barrel and the top light ring, the first seal is used to seal a gap between the handle barrel and the top light ring, so as to avoid water leakage from the gap between the handle barrel and the top light ring, and improve waterproof performance and service life of the personal care device.

In the above technical solution, the first seal is provided with at least one first protrusion, and the at least one first protrusion is in interference fit with the handle barrel.

In this technical solution, the first seal is provided with at least one first protrusion, and the at least one first protrusion is in interference fit with the handle barrel, thereby improving the sealing effect of the first seal between the handle barrel and the top light ring.

In the above technical solution, the first protrusion is configured as a closed loop extending in a peripheral direction along an outer wall of the first seal.

In this technical solution, the first protrusion is a closed loop extending in a peripheral direction along an outer wall of the first seal, in this way, the sealing around the top lamp ring can be achieved through the first protrusion, thus ensuring sealing effect between the first protrusion and the top light ring, and avoiding failure of the personal care device caused by water leakage from the connection gap between the first protrusion and the top light ring.

In the above technical solution, a side of the top light ring facing an inner wall surface of the handle barrel is provided with a limit slot, the limit slot is matched with the first seal, and the first seal is provided in the limit slot.

In this technical solution, the top light ring is provided with a limit slot, and the first seal is provided in the limit slot, thereby realizing positioning of the first seal, facilitating pre-installation of the first seal, and thus ensuring the sealing effect of the first seal on the top light ring and the inner wall surface of the handle barrel.

In the above technical solution, the personal care device further includes: a driving part, which includes a third end provided in the handle barrel and a fourth end extending out of the first end of the handle barrel, where the driving part generates vibration during operation, a portion of the vibration is transmitted to the handle barrel, and a portion of the vibration is transmitted to a personal care component that is releasably connected with the fourth end, the top light ring is provided around peripheral side of the driving part; a second seal, which is provided in the handle barrel, and located between the driving part and the top light ring, where a part of the second seal located between the driving part and the top light ring is configured as an elastic part, and the elastic part is used to seal a gap between the driving part and the top light ring, and absorb and reduce the vibration transmitted to the handle barrel during operation of the driving part.

In this technical solution, the driving part has a third end and a fourth end, the third end is located in the handle barrel, and the fourth end extends out of the handle barrel from the first end of the handle barrel to release vibration to the personal care component so as to achieve cleaning effect. The second seal is located between the driving part and the top light ring, and is used to seal the gap between the driving part and the top light ring, thereby avoiding water leakage from the gap between the driving part and the top light ring, and meanwhile absorbing and reducing the vibration transmitted to the handle barrel during operation of the driving part, and improving the user's holding feeling.

In the above technical solution, the second seal includes: a first sealing ring, configured as a closed loop extending in a peripheral direction along an outer wall of the driving part; a second sealing ring, provided on an outer wall surface of the first sealing ring, and contacting a part of the top light ring extending into the handle barrel, where the second sealing ring is matched with the first sealing ring to seal the gap between the top light ring and the driving part; where an inner wall surface of the first sealing ring is provided with at least one second protrusion, and the at least one second protrusion is in interference fit with a periphery of the driving part.

In this technical solution, the second seal includes a first sealing ring and a second sealing ring, the second sealing ring contacts the top light ring to achieve sealing with the top light ring, the first sealing ring is located on a peripheral side of the driving part, and the inner wall surface of the first sealing ring is provided with at least one second protrusion, and through interference fit between the second protrusion and the periphery of the driving part, the sealing between the driving part and the first sealing ring is realized, that is, through the first sealing ring and the second sealing ring, the gap between the top light ring and the driving part is sealed, thereby avoiding water leakage from the gap between the driving part and the top light ring.

In the above technical solution, the second protrusion is configured as a ring shape to surround the peripheral side of the driving part.

In this technical solution, the second protrusion is provided in a ring shape and is located on the peripheral side of the driving part, so that the sealing along periphery of the driving part can realized, ensuring the effect of waterproof.

In the above technical solution, the top light ring is provided with a channel, which is parallel to a radial plane of the main extension line and has a preset height, the fourth end extends from the channel out of the first end along the direction of the main extension line, the first sealing ring protrudes from the second sealing ring towards the first end and extends into the channel, and an inner wall surface of a part of the first sealing ring extending into the channel is provided with a second protrusion.

In this technical solution, the first sealing ring protrudes from the second sealing ring towards the first end and extends into the channel, and the inner wall surface of this part is provided with a second protrusion, thereby ensuring the waterproof effect of the driving part.

In the above technical solution, the outer wall surface of the second sealing ring is provided with a third protrusion, and the third protrusion is in interference fit with the periphery of the top light ring.

In this technical solution, the second sealing ring is provided with a third protrusion on the outer wall surface thereof, and the third protrusion is in interference fit with the periphery of the top light ring to seal the gap between the top light ring and the second sealing ring.

In the above technical solution, a side of the top light ring facing the second sealing ring is provided with a fourth protrusion, the fourth protrusion is in interference fit with periphery of the second sealing ring.

In this technical solution, a side of the top light ring facing the second sealing ring is provided with a fourth protrusion, the fourth protrusion is in interference fit with a periphery of the second sealing ring, which realizes the sealing between the inner wall surface of the top light ring and the second sealing ring, thereby realizing the sealing between the inner wall surface of the top light ring and the driving part.

In the above technical solution, the second sealing ring includes a first sealing portion and a second sealing portion, the first sealing portion is connected with the first sealing ring and extends in a direction away from the first sealing ring, the second sealing portion is connected with an end of the first sealing portion away from the first sealing ring, and extends towards the second end of the handle barrel, the third protrusion surrounds the outer wall surface of the second sealing portion, and the fourth protrusion is in interference fit with the first sealing portion.

In this technical solution, sealing of the inner wall surface of the top light ring can be achieved by the first sealing portion, the fourth protrusion provided on the first sealing portion, and the third protrusion provided on the second sealing portion.

In the above technical solution, at least a part of the handle barrel is configured as a metal piece.

In this technical solution, at least a part of the handle barrel is configured as a metal piece, which can reduce volume of the handle barrel, may be convenient for the user to hold, and also prevent the personal care device from cracking when it falls, thereby avoiding water leakage from the crack.

### BRIEF DESCRIPTION OF DRAWINGS

FIG. 1 is a sectional view of a personal care device according to an embodiment of the present invention;
FIG. 2 is a partial structural diagram of the personal care device of the embodiment shown in FIG. 1; and
FIG. 3 is an exploded view of a personal care device according to an embodiment of the present invention.

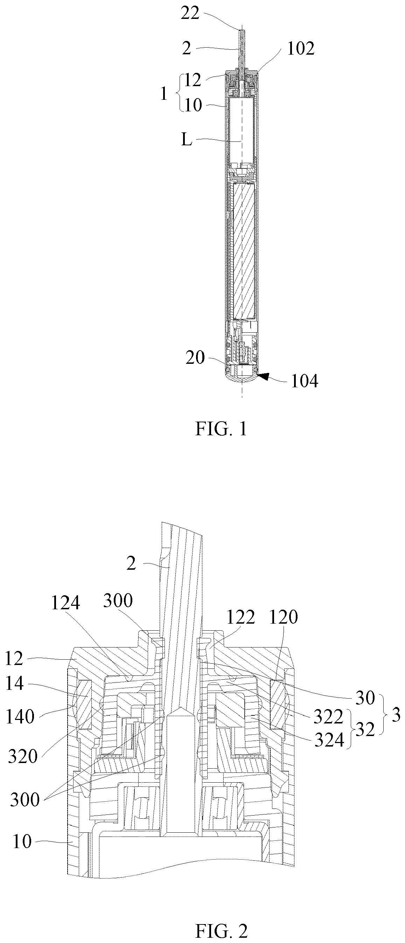

Where the corresponding relationships between reference numerals and parts names in FIGS. 1 to 3 are as below:
1 handle assembly, 10 handle barrel, 102 first end, 104 second end, 12 top light ring, 120 limit slot, 122 channel, 124 fourth protrusion, 14 first seal, 140 first protrusion, 15 power key, 16 key silicone, 2 driving part, 20 third end, 22 fourth end, 23 pressing ring, 24 light-emitting part and key soft panel, 25 double-sided adhesive tape, 26 light-emitting part bracket, 27 motor front silicone, 28 motor, 29 motor rear silicone, 210 main board double-sided adhesive tape, 211 main board, 212 bracket, 213 battery double-sided adhesive tape, 214 battery, 215 battery shockproof part, 216 universal serial bus female socket, 217 bracket sealing ring, 218 sealing film, 219 universal serial bus bracket, 3 second seal, 30 first sealing ring, 300 second protrusion, 32 second sealing ring, 320 third protrusion, 322 first sealing portion, 324 second sealing portion, 4 tail cover assembly, 40 tail cover sealing ring, 42 tail cover, L main extension line.

### DESCRIPTION OF EMBODIMENTS

As shown in FIGS. 1 and 2, an embodiment of the present invention provides a personal care device, including a handle assembly 1. The handle assembly 1 includes a handle barrel 10 and a top light ring 12. For the convenience of describing structure of the handle assembly 1 provided in the embodiment of the application, dotted line L in FIG. 1 may be defined as main extension line of the handle barrel 10. Specifically, the handle assembly 1 has a handle barrel 10 suitable for holding, that is, peripheral surface of the handle barrel 10 is a holding surface suitable for users to hold, and the handle barrel 10 is substantially symmetrically provided about the main extension line L. The handle barrel 10 has a main extension line L extending along an axial direction of the handle assembly 1, and a first end 102 and a second end 104 provided opposite to each other, the main extension line L extends from the first end 102 of the handle barrel 10 to the second end 104 of the handle barrel 10, the top light ring 12 is provided with a clamping part, the top light ring 12 is clamped with the first end 102 through the clamping part, and a part of the top light ring 12 extends into the handle barrel 10 from the first end 102; and a first seal 14 is provided between the handle barrel 10 and the top light ring 12 and is configured to seal the gap between the top light ring 12 and the handle barrel 10.

The personal care device provided by the present invention includes a handle assembly 1, the handle assembly 1 includes a handle barrel 10 and a top light ring 12, the handle barrel 10 has a main extension line L extending along an axial direction of the handle assembly 1, a first end 102 and a second end 104 provided opposite to each other, the main extension line L extends from the first end 102 of the handle barrel 10 to the second end 104 of the handle barrel 10, where the top light ring 12 is provided at the first end 102 of the handle barrel 10, a first seal 14 is provided between the handle barrel 10 and the top light ring 12, the first seal 14 is used to seal the gap between the handle barrel 10 and the top light ring 12, so as to avoid water leakage from the gap between the handle barrel 10 and the top light ring 12, and improve waterproof performance and service life of the personal care device.

It can be understood that the top light ring 12 is provided at and covers the first end 102 of the handle barrel 10, and part of the top light ring 12 extends into the handle barrel 10 to connect with the handle barrel 10, improving connection strength between the top light ring 12 and the handle barrel 10. Where the first seal 14 is provided between the part of the top light ring 12 extending into the handle barrel 10 and the inner wall surface of the handle barrel 10 to realize sealing between the handle barrel 10 and the top light ring 12, thereby avoiding water leakage from the gap between the handle barrel 10 and the top light ring 12.

Further, the second end 104 of the handle barrel 10 is provided with a tail cover 42, and the tail cover 42 covers the second end 104 of the handle barrel 10 to realize sealing of the handle barrel 10.

In one possible design, the handle barrel 10 is a metal handle barrel to avoid cracking when the personal care device falls, thus avoiding water leakage from the crack. The first seal 14 includes a silicone part or a rubber part. The first seal 14 is annular and provided in a peripheral direction of the top light ring 12.

Specifically, the clamping part includes a snap, and the top light ring 12 is clamped with the first end 102 of the handle barrel 10 through the snap.

As shown in FIG. 2, in the above embodiment, the first seal 14 is provided with at least one first protrusion 140, and the at least one first protrusion 140 is in interference fit with the handle barrel 10.

In this embodiment, the first seal 14 is provided with at least one first protrusion 140, and the at least one first protrusion 140 is in interference fit with the handle barrel 10, thereby improving sealing effect of the first seal 14 between the handle barrel 10 and the top light ring 12.

Specifically, the first seal 14 is a special-shaped soft rubber part.

In the above embodiment, the first protrusion 140 is configured as a closed loop extending in a peripheral direction along the outer wall of the first seal 14.

In this embodiment, the first protrusion 140 is a closed loop extending in a peripheral direction of the outer wall of the first seal 14, in this way, the sealing around the top lamp ring 12 can be achieved through the first protrusion 140, thus ensuring sealing effect between the first protrusion 140 and the top light ring 12, and avoiding failure of the personal care device caused by water leakage from the connection gap between the first protrusion 140 and the top light ring 12.

In a specific application, when there are a plurality of first protrusions 140, the plurality of first protrusions 140 are spaced along a direction of the main extension line L, so as to achieve multiple waterproofing and improve waterproofing effect.

Further, the first protrusion 140 and the first seal 14 are in an integrated structure, specifically, the first protrusion 140 and the first seal 14 are integratedly manufactured.

As shown in FIG. 2, in the above embodiment, a side of the top light ring 12 facing the inner wall surface of the handle barrel 10 is provided with a limit slot 120, the limit slot 120 is matched with the first seal 14, and the first seal 14 is provided in the limit slot 120.

In this embodiment, the top light ring 12 is provided with a limit slot 120, and the first seal 14 is provided in the limit slot 120, which realizes positioning of the first seal 14, facilitates the pre-installation of the first seal 14, and thus ensures the sealing effect of the first seal 14 on the top light ring 12 and the inner wall surface of the handle barrel 10.

It can be understood that the first seal 14 is installed in the limit slot 120, and at least a part of the first seal 14 protrudes from the limit slot 120 and contacts the handle barrel 10 to achieve the sealing between the top light ring 12 and the handle barrel 10.

Further, at least one first protrusion 140 protrudes from the limit slot 120.

As shown in FIGS. 1 and 2, in the above embodiment, the personal care device further includes: a driving part 2, which includes a third end 20 provided in the handle barrel 10 and a fourth end 22 extending from the first end 102 of the handle barrel 10, where the driving part 2 generates vibration during operation, a portion of the vibration is transmitted to the handle barrel 10, and a portion of the vibration is transmitted to a personal care component that is releasably connected with the fourth end 22, and the top light ring 12 is provided around the peripheral side of the driving part; a second seal 3, which is provided in the handle barrel 10 and located between the driving part 2 and the top light ring 12, where a part of the second seal 3 located between the driving part 2 and the top light ring 12 is configured as an elastic part to seal the gap between the driving part 2 and the top light ring 12, and absorb and reduce the vibration transmitted to the handle barrel 10 when the driving part 2 is in operation.

In this embodiment, the personal care device further includes a driving part 2 and a second seal 3, the driving part 2 has a third end 20 and a fourth end 22, the third end 20 is located in the handle barrel 10, and the fourth end 22 extends out of the handle barrel 10 from the first end 102 of the handle barrel 10 to release vibration to a personal care component so as to achieve an cleaning effect. The second seal 3 is located between the driving part 2 and the top light ring 12, and is used to seal the gap between the driving part 2 and the top light ring 12, thereby avoiding water leakage from the gap between the driving part 2 and the top light ring 12, absorbing and reducing the vibration transmitted to the handle barrel 10 during the operation of the driving part 2, and improving the user's holding feeling.

Where when the driving part 2 operates, the driving part 2 generates vibration, a part of which is transmitted to the handle barrel 10, and a part of which is transmitted to the personal care component connected with the fourth end 22.

As shown in FIG. 2, in the above embodiment, the second seal 3 includes: a first sealing ring 30, configured as a closed loop extending in a peripheral direction along the outer wall of the driving part 2; a second sealing ring 32, provided on an outer wall surface of the first sealing ring 30, where the second sealing ring 32 contacts the part of the top light ring 12 extending into the handle barrel 10, the second sealing ring 32 cooperates with the first sealing ring 30 to seal the gap between the top light ring 12 and the driving part 2; where an inner wall surface of the first sealing ring 30 is provided with at least one second protrusion 300, and the at least one second protrusion 300 is in interference fit around a periphery of the driving part 2.

In this embodiment, the second seal 3 includes a first sealing ring 30 and a second sealing ring 32, the second sealing ring 32 contacts the top light ring 12 to achieve sealing with the top light ring 12, the first sealing ring 30 is located on a peripheral side of the driving part 2, and the inner wall surface of the first sealing ring 30 is provided with at least one second protrusion 300, and through interference fit between the second protrusion 300 and the periphery of the driving part 2, the sealing between the driving part 2 and the first sealing ring 30 is realized, that is, through the first sealing ring 30 and the second sealing ring 32, the gap between the top light ring 12 and the driving part 2 is sealed, thereby avoiding water leakage from the gap between the driving part 2 and the top light ring 12.

It can be understood that when the personal care device is working, the driving part 2 generates vibration, and a portion of the vibration is transmitted to the personal care component connected to the fourth end 22 of the driving part 2 to achieve personal care work, specifically, the personal care device includes an electric toothbrush, and when brushing teeth, the driving part 2 is easy to contact with liquids and chemicals, and thus, in order to prevent liquids or chemicals from flowing into the power supply device in the handle barrel 10 along the driving part 2, a first sealing ring 30 is provided around the driving part 2, and the sealing of the periphery of the driving part 2 is realized by the at least one second protrusion 300.

In a specific application, there are a plurality of second protrusions 300, and the plurality of second protrusions 300 are provided along a direction of the main extension line L of the handle barrel 10, which improves the waterproof effect.

Specifically, there are three second protrusions 300, and the three protrusions achieve three layers of waterproof, effectively improving the waterproof effect of the personal care device.

In the above embodiment, the second protrusion 300 is configured as a ring shape to surround the peripheral side of the driving part 2.

In this embodiment, the second protrusion 300 is provided in a ring shape and is located on the peripheral side of the driving part 2, so that the driving part 2 can realize sealing along its peripheral direction, ensuring the effect of waterproof.

As shown in FIG 2, in the above embodiment, the top light ring 12 is provided with a channel 122, which is parallel to a radial plane of the main extension line L and has a preset height, the fourth end 22 extends out of the first end 102 from the channel 122 along the direction of the main extension line L, the first sealing ring 30 protrudes from the second sealing ring 32 towards the first end 102 and extends into the channel 122, and an inner wall surface of a part of the first sealing ring 30 extending into the channel 122 is provided with a second protrusion 300.

In this embodiment, the first sealing ring 30 protrudes from the second sealing ring 32 towards the first end 102 and extends into the channel 122 which is parallel to a radial plane of the main extension line L and has a preset height, and the inner wall surface of this part is provided with a second protrusion 300, thereby ensuring the waterproof effect of the driving part 2.

As shown in FIG. 2, in the above embodiment, the outer wall surface of the second sealing ring 32 is provided with a third protrusion 320, and the third protrusion 320 is in interference fit with the periphery of the top light ring 12.

In this embodiment, the outer wall surface of the second sealing ring 32 is provided with a third protrusion 320, and the third protrusion 320 is in interference fit with the periphery of the top light ring 12 to seal the gap between the top light ring 12 and the second sealing ring 32.

In a specific application, the third protrusion 320 is annular, and is provided circumferentially on the outer wall surface of the second sealing ring 32 along the peripheral direction of the main extension line L.

As shown in FIG. 2, in the above embodiment, a side of the top light ring 12 facing the second sealing ring 32 is provided with a fourth protrusion 124, the fourth protrusion 124 is in interference fit with a periphery of the second sealing ring 32.

In this embodiment, a side of the top light ring 12 facing the second sealing ring 32 is provided with a fourth protrusion 124, the fourth protrusion 124 is in interference fit with a periphery of the second sealing ring 32, which realizes the sealing between the inner wall surface of the top light ring 12 and the second sealing ring 32, thereby realizing the sealing between the inner wall surface of the top light ring 12 and the driving part 2.

In a specific application, the fourth protrusion 124 is provided in a ring shape and is provided circumferentially along the peripheral direction of the main extension line L.

As shown in FIG. 2, in the above embodiment, the second sealing ring 32 includes a first sealing portion 322 and a second sealing portion 324, the first sealing portion 322 is connected with the first sealing ring 30 and extends in a direction away from the first sealing ring 30, the second sealing portion 324 is connected with an end of the first sealing portion 322 away from the first sealing ring 30, and extends towards the second end 104 of the handle barrel 10, the third protrusion 320 surrounds the outer wall surface of the second sealing portion 324, and the fourth protrusion 124 is in interference fit with the first sealing portion 322.

In this embodiment, the second sealing ring 32 includes a first sealing portion 322 and a second sealing portion 324, one end of the first sealing portion 322 is connected with the first sealing ring 30, and the other end thereof extends in a direction away from the first sealing ring 30, the second sealing portion 324 is connected with the end of the first sealing portion 322 away from the first sealing ring 30, and extends towards the second end 104 of the handle barrel 10 along the main extension line L. In this way, the inner wall surface of the top light ring 12 can be sealed by the first sealing portion 322, the fourth protrusion 124 provided on the first sealing portion 322, and the third protrusion 320 provided on the second sealing portion 324.

In a possible design, along the direction of the main extension line L, a part of the first sealing ring 30 protrudes from the first sealing portion 322 towards the first end 102, accordingly, the top light ring 12 is provided with a channel 122, the fourth end 22 of the driving part 2 protrudes out of the handle barrel 10 through the channel 122, a part of the first sealing ring 30 extends into the channel 122, and the inner wall surface of the part of the first sealing ring 30 extending into the channel 122 is provided with a second protrusion 300. In this way, under the combined action of the fourth protrusion 124 and the second protrusion 300, it can not only prevent liquids from flowing into the handle barrel 10 from the outer wall surface of the driving part 2, but also prevent liquids from flowing into the handle barrel 10 from the inner wall surface of the top light ring 12.

Specifically, in a cross section along the direction of the main extension line L, a cross section of the second sealing portion 324 is L-shaped.

In any of the above embodiments, at least a part of the handle barrel 10 is configured as a metal piece.

In this embodiment, at least a part of the handle barrel 10 is configured as a metal piece, which can reduce volume of the handle barrel 10, may be convenient for the user to hold, and prevent the personal care device from cracking when it falls, thereby avoiding water leakage from the crack.

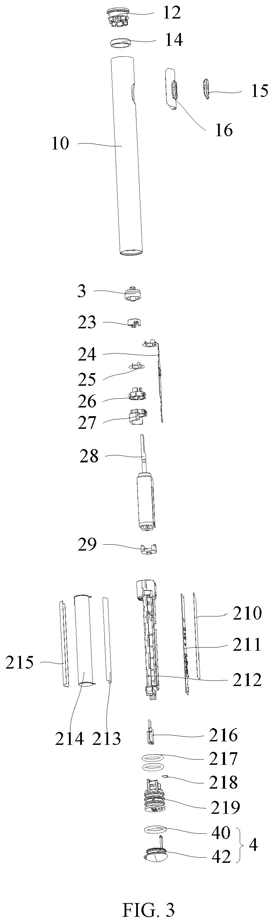

As shown in FIG. 3, in a specific application, the handle barrel 10 is a metal handle barrel, the top light ring 12 is provided with a first seal 14, the first seal 14 is provided with a first protrusion 140, the first seal 14 is a special-shaped soft rubber and is in interference fit with interior of the metal handle to form an effective sealing, which is a first waterproof structure. The inner wall surface of the second seal 3 is provided with three second protrusions 300, the three second protrusions 300 are in interference fit with the periphery of an output shaft of the driving part 2 to form three waterproof lines so as to achieve effective sealing, which are a second waterproof structure. The outer wall surface of the second sealing part 3 is also provided with a third protrusion 320, and the top light ring 12 is provided with a fourth protrusion 124, so that the second seal 3 and the top light ring 12 are in interference fit with each other to form two waterproof lines, which are a third waterproof structure. As such, the waterproof effect is improved through the three waterproof structures.

Specifically, as shown in FIG. 3, the driving part 2 includes a pressing ring 23, a light-emitting part and key soft panel 24, a double-sided adhesive tape 25, a light-emitting part bracket 26, a motor front silicone 27, a motor 28, a motor rear silicone 29, a main board double-sided adhesive tape 210, a main board 211, a bracket 212, a battery double-sided adhesive tape 213, a battery 214, a battery shockproof part 215, a universal serial bus female socket 216, a bracket sealing ring 217, a sealing film 218, and a universal serial bus bracket 219.

An installation process includes:
installing a key silicone 16 in the handle barrel 10 through an over mold process, putting the first seal 14 into the top light ring 12 in a sleeving manner and then installing them on the handle barrel 10, and gluing a power key 15 to the key silicone 16;
putting the motor front silicone 27 into the motor 28 in a sleeving manner, installing the light-emitting part bracket 26 on the motor front silicone, sticking the double-sided adhesive tape 25 onto the light-emitting part bracket 26, putting the motor rear silicone 29 on the motor in a sleeving manner, and then installing them in the bracket 212;
installing the light-emitting part and key soft panel 24 in the light-emitting part bracket 26 and inserting them into a terminal of the mainboard 211, installing the pressing ring 23 on the light-emitting part and key soft panel 24, and then fitting the second seal 3 on the output shaft of the motor 28 in a sleeving manner;
sticking the main board double-sided adhesive tape 210 to the bracket 212, and then installing the main board 211 on the bracket 212 through the main board double-sided adhesive tape 210;
sticking the battery double-sided adhesive tape 213 on the bracket 212, and then installing the battery 214 on the bracket 212 through the battery double-sided adhesive tape 213, and inserting them into corresponding welding leg of the main board 211, and then sticking the battery shockproof part 215 on the battery 214;
installing the universal serial bus female socket 216 into the universal serial bus bracket 219, installing the bracket sealing ring 217 into the universal serial bus bracket 219, and then injecting with AB glue. The tail cover sealing ring 40 is installed on the tail cover 42 to form the tail cover assembly 4;
finally, installing the driving part 2 into the handle assembly 1, and installing the tail cover assembly 4 into the handle assembly 1.

Specifically, the personal care device includes an electric toothbrush, a razor, and the like.

The above is only the preferred embodiments of the present application.

## Claims

1. A personal care device, comprising:
a handle assembly (1), configured for holding, the handle assembly (1) comprising a handle barrel (10) and a top light ring (12), wherein
the handle barrel (10) has a main extension line extending along an axial direction of the handle assembly (1), and a first end (102) and a second end (104) provided opposite to each other, the main extension line extends from the first end (102) to the second end (104);
the top light ring (12) is provided with a clamping part, the top light ring (12) is clamped with the first end (102) through the clamping part, and a part of the top light ring (12) extends into the handle barrel (10) from the first end(102);
a first seal (14) is provided between the handle barrel (10) and the top light ring (12) and is configured to seal a gap between the top light ring (12) and the handle barrel (10),
wherein the first seal (14) is provided with at least one first protrusion (140), and the at least one first protrusion (140) is in interference fit with the handle barrel (10);
wherein the personal care device is **characterized in that** it further comprises:
a driving part (2), comprising a third end (20) provided in the handle barrel (10) and a fourth end (22) extending out of the first end (102) of the handle barrel (10), wherein the driving part (2) generates vibration during operation, a portion of the vibration is transmitted to the handle barrel (10), and a portion of the vibration is transmitted to a personal care component that is releasably connected with the fourth end (22), the top light ring (12) is provided around peripheral side of the driving part (2);
a second seal (3), provided in the handle barrel (10), and located between the driving part (2) and the top light ring (12), wherein a part of the second seal (3) located between the driving part (2) and the top light ring (12) is configured as an elastic part, and the elastic part is used to seal a gap between the driving part (2) and the top light ring (12), and absorb and reduce the vibration transmitted to the handle barrel (10) during operation of the driving part (2);
wherein the second seal (3) comprises:
a first sealing ring (30), configured as a closed loop extending in a peripheral direction along an outer wall of the driving part (2); and
a second sealing ring (32), provided on an outer wall surface of the first sealing ring (30), wherein the second sealing ring (32) contacts the part of the top light ring (12) extending into the handle barrel (10), the second sealing ring (32) is matched with the first sealing ring (30) to seal the gap between the top light ring (12) and the driving part (2);
wherein an inner wall surface of the first sealing ring (30) is provided with at least one second protrusion (300), and the at least one second protrusion (300) is in interference fit with a periphery of the driving part (2).

2. The personal care device according to claim 1, wherein the first protrusion (140) is configured as a closed loop extending in a peripheral direction along an outer wall of the first seal (14).

3. The personal care device according to claim 1, wherein a side of the top light ring (12) facing an inner wall surface of the handle barrel (10) is provided with a limit slot (120), the limit slot (120) is matched with the first seal (14), and the first seal (14) is provided in the limit slot (120).

4. The personal care device according to claim 1, wherein the top light ring (120) is provided with a channel (122), the channel (122) is parallel to a radial plane of the main extension line and has a preset height, the fourth end (22) extends out of the first end (102) from the channel (122) along a direction of the main extension line, the first sealing ring (30) protrudes out of the second sealing ring (32) towards the first end (102) and extents into the channel (122), an inner wall surface of a part of the first sealing ring (30) extending into the channel (122) is provided with the second protrusion (300).

5. The personal care device according to claim 1, wherein an outer wall surface of the second sealing ring (32) is provided with a third protrusion (320), and the third protrusion (320) is in interference fit with a periphery of the top light ring (12).

6. The personal care device according to claim 5, wherein a side of the top light ring (12) facing the second sealing ring (32) is provided with a fourth protrusion (124), and the fourth protrusion (124) is in interference fit with a periphery of the second sealing ring (32).

7. The personal care device according to claim 6, wherein the second sealing ring (32) comprises a first sealing portion (322) and a second sealing portion (324), the first sealing portion (322) is connected with the first sealing ring (30) and extends in a direction away from the first sealing ring (30), the second sealing portion (324) is connected with an end of the first sealing portion (322) away from the first sealing ring (30) and extends towards the second end (104) of the handle barrel (10), the third protrusion (320) surrounds an outer wall surface of the second sealing portion (324), and the fourth protrusion (124) is in interference fit with the first sealing portion (322).

8. The personal care device according to any one of claims 1 to 3, wherein at least a part of the handle barrel (10) is configured as a metal piece.

## Patentansprüche

1. Körperpflegevorrichtung, die aufweist:
eine Griffanordnung (1), die zum Halten konfiguriert ist, wobei die Griffanordnung (1) einen Griffschaft (10) und einen oberen Beleuchtungsring (12) aufweist, wobei der Griffschaft (10) eine Haupterstreckungslinie, die sich entlang einer axialen Richtung der Griffanordnung (1) erstreckt, und ein erstes Ende (102) und ein zweites Ende (104) aufweist, die einander gegenüberliegend vorgesehen sind, wobei sich die Haupterstreckungslinie von dem ersten Ende (102) zu dem zweiten Ende (104) erstreckt; der obere Beleuchtungsring (12) mit einem Klemmteil versehen ist, der obere Beleuchtungsring (12) mit dem ersten Ende (102) durch den Klemmteil geklemmt ist und ein Teil des oberen Beleuchtungsrings (12) sich vom ersten Ende (102) in den Griffschaft (10) erstreckt;
eine erste Dichtung (14) zwischen dem Griffschaft (10) und dem oberen Beleuchtungsring (12) vorgesehen ist und konfiguriert ist, einen Spalt zwischen dem oberen Beleuchtungsring (12) und dem Griffschaft (10) abzudichten,
wobei die erste Dichtung (14) mit mindestens einem ersten Vorsprung (140) versehen ist, und der mindestens eine erste Vorsprung (140) in Presspassung mit dem Griffschaft (10) steht;
wobei die Körperpflegevorrichtung **dadurch gekennzeichnet ist, dass** sie ferner aufweist:
einen Antriebsteil (2), der ein drittes Ende (20), das im Griffschaft (10) vorgesehen ist, und ein viertes Ende (22) aufweist, das sich aus dem ersten Ende (102) des Griffschafts (10) heraus erstreckt, wobei der Antriebsteil (2) während des Betriebs eine Vibration erzeugt, ein Teil der Vibration auf den Griffschaft (10) übertragen wird und ein Teil der Vibration auf eine Körperpflegekomponente übertragen wird, die lösbar mit dem vierten Ende (22) verbunden ist, wobei der obere Beleuchtungsring (12) um die Umfangsseite des Antriebsteils (2) vorgesehen ist;
eine zweite Dichtung (3), die im Griffschaft (10) vorgesehen ist und sich zwischen dem Antriebsteil (2) und dem oberen Beleuchtungsring (12) befindet, wobei ein Teil der zweiten Dichtung (3), der sich zwischen dem Antriebsteil (2) und dem oberen Beleuchtungsring (12) befindet, als ein elastischer Teil konfiguriert ist und der elastische Teil dazu verwendet wird, einen Spalt zwischen dem Antriebsteil (2) und dem oberen Beleuchtungsring (12) abzudichten und die während des Betriebs des Antriebsteils (2) auf den Griffschaft (10) übertragene Vibration zu absorbieren und zu reduzieren;
wobei die zweite Dichtung (3) folgendes aufweist:
einen ersten Dichtungsring (30), der als eine geschlossene Schleife konfiguriert ist, die sich in einer Umfangsrichtung entlang einer Außenwand des Antriebsteils (2) erstreckt; und
einen zweiten Dichtungsring (32), der an einer Außenwandfläche des ersten Dichtungsrings (30) vorgesehen ist, wobei der zweite Dichtungsring (32) den Teil des oberen Beleuchtungsrings (12) berührt, der sich in den Griffschaft (10) hinein erstreckt, wobei der zweite Dichtungsring (32) mit dem ersten Dichtungsring (30) zusammenpasst, um den Spalt zwischen dem oberen Beleuchtungsring (12) und dem Antriebsteil (2) abzudichten;
wobei eine Innenwandfläche des ersten Dichtungsrings (30) mit mindestens einem zweiten Vorsprung (300) versehen ist, und der mindestens eine zweite Vorsprung (300) in Presspassung mit einem Umfang des Antriebsteils (2) steht.

2. Körperpflegevorrichtung nach Anspruch 1, wobei der erste Vorsprung (140) als eine geschlossene Schleife ausgebildet ist, die sich in einer Umfangsrichtung entlang einer Außenwand der ersten Dichtung (14) erstreckt.

3. Körperpflegevorrichtung nach Anspruch 1, wobei eine Seite des oberen Beleuchtungsrings (12), die einer Innenwandfläche des Griffschafts (10) zugewandt ist, mit einem Begrenzungsschlitz (120) versehen ist, der Begrenzungsschlitz (120) an die erste Dichtung (14) angepasst ist und die erste Dichtung (14) in dem Begrenzungsschlitz (120) vorgesehen ist.

4. Körperpflegevorrichtung nach Anspruch 1, wobei der obere Beleuchtungsring (120) mit einem Kanal (122) versehen ist, der Kanal (122) parallel zu einer radialen Ebene der Haupterstreckungslinie verläuft und eine vorgegebene Höhe aufweist, das vierte Ende (22) sich von dem ersten Ende (102) aus dem Kanal (122) entlang einer Richtung der Haupterstreckungslinie erstreckt, der erste Dichtungsring (30) aus dem zweiten Dichtungsring (32) zum ersten Ende (102) herausragt und sich in den Kanal (122) erstreckt, wobei eine Innenwandfläche eines Teils des ersten Dichtungsrings (30), der sich in den Kanal (122) erstreckt, mit dem zweiten Vorsprung (300) versehen ist.

5. Körperpflegevorrichtung nach Anspruch 1, wobei eine Außenwandfläche des zweiten Dichtungsrings (32) mit einem dritten Vorsprung (320) versehen ist und der dritte Vorsprung (320) in Presspassung mit einem Umfang des oberen Beleuchtungsrings (12) steht.

6. Körperpflegevorrichtung nach Anspruch 5, wobei eine dem zweiten Dichtungsring (32) zugewandte Seite des oberen Beleuchtungsrings (12) mit einem vierten Vorsprung (124) versehen ist und der vierte Vorsprung (124) in Presspassung mit einem Umfang des zweiten Dichtungsrings (32) steht.

7. Körperpflegevorrichtung nach Anspruch 6, wobei der zweite Dichtungsring (32) einen ersten Dichtungsabschnitt (322) und einen zweiten Dichtungsabschnitt (324) aufweist, wobei der erste Dichtungsabschnitt (322) mit dem ersten Dichtungsring (30) verbunden ist und sich in eine Richtung weg vom ersten Dichtungsring (30) erstreckt, der zweite Dichtungsabschnitt (324) mit einem von dem ersten Dichtungsring (30) entfernten Ende des ersten Dichtungsabschnitts (322) verbunden ist und sich zum zweiten Ende (104) des Griffschafts (10) erstreckt, der dritte Vorsprung (320) eine Außenwandfläche des zweiten Dichtungsabschnitts (324) umgibt und der vierte Vorsprung (124) in Presspassung mit dem ersten Dichtungsabschnitt (322) steht.

8. Körperpflegevorrichtung nach einem der Ansprüche 1 bis 3, wobei mindestens ein Teil des Griffschafts (10) als Metallteil konfiguriert ist.

## Revendications

1. Dispositif de soin personnel, comprenant :
un ensemble de poignée (1), prévu pour le maintien, ledit ensemble de poignée (1) comprenant un barillet de poignée (10) et une bague lumineuse supérieure (12), où le barillet de poignée (10) présente une ligne d'extension principale s'étendant dans la direction axiale de l'ensemble de poignée (1), et une première extrémité (102) et une deuxième extrémité (104) opposées l'une à l'autre, la ligne d'extension principale s'étendant de la première extrémité (102) à la deuxième extrémité (104) ;
la bague lumineuse supérieure (12) est pourvue d'une pièce de serrage, ladite bague lumineuse supérieure (12) est fixée à la première extrémité (102) par la pièce de serrage, et une partie de la bague lumineuse supérieure (12) s'étend dans le barillet de poignée (10) à partir de la première extrémité (102) ;
un premier joint (14) est présenté entre le barillet de poignée (10) et la bague lumineuse supérieure (12) et est prévu pour étanchéifier un espace entre la bague lumineuse supérieure (12) et le barillet de poignée (10),
ledit premier joint (14) étant pourvu d'au moins une première protubérance (140), et ladite au moins une première protubérance (140) étant en ajustement serré avec le barillet de poignée (10) ;
ledit dispositif de soin personnel étant **caractérisé en ce qu'**il comprend en outre :
une partie d'entraînement (2), comprenant une troisième extrémité (20) prévue dans le barillet de poignée (10) et une quatrième extrémité (22) s'étendant hors de la première extrémité (102) du barillet de poignée (10), ladite partie d'entraînement (2) générant des vibrations en cours de fonctionnement, une partie des vibrations étant transmise au barillet de poignée (10), et une partie des vibrations étant transmise à un composant de soin personnel raccordé de manière amovible à la quatrième extrémité (22), la bague lumineuse supérieure (12) étant prévue autour du côté périphérique de la partie d'entraînement (2) ;
un deuxième joint (3), prévu dans le barillet de poignée (10) et situé entre la partie d'entraînement (2) et la bague lumineuse supérieure (12), une partie dudit deuxième joint (3) située entre la partie d'entraînement (2) et la bague lumineuse supérieure (12) étant prévue comme partie élastique, ladite partie élastique étant utilisée pour étanchéifier un espace entre la partie d'entraînement (2) et la bague lumineuse supérieure (12), et pour absorber et réduire la vibration transmise au barillet de poignée (10) en cours de fonctionnement de la partie d'entraînement (2) ;
où le deuxième joint (3) comprend :
une première bague d'étanchéité (30), prévue comme boucle fermée s'étendant dans la direction périphérique le long d'une paroi extérieure de la partie d'entraînement (2) ; et
un deuxième bague d'étanchéité (32), prévue sur une surface de paroi extérieure de la première bague d'étanchéité (30), ladite deuxième bague d'étanchéité (32) entrant en contact avec la partie de la bague lumineuse supérieure (12) s'étendant dans le barillet de poignée (10), ladite deuxième bague d'étanchéité (32) correspondant à la première bague d'étanchéité (30) pour étanchéifier l'espace entre la bague lumineuse supérieure (12) et la partie d'entraînement (2) ;
où une surface de paroi intérieure de la première bague d'étanchéité (30) est pourvue d'au moins une deuxième protubérance (300), et ladite au moins une deuxième protubérance (300) est en ajustement serré avec une périphérie de la partie d'entraînement (2).

2. Dispositif de soin personnel selon la revendication 1, où la première protubérance (140) est prévue comme boucle fermée s'étendant dans la direction périphérique le long d'une paroi extérieure du premier joint (14).

3. Dispositif de soin personnel selon la revendication 1, où un côté de la bague lumineuse supérieure (12) faisant face à une surface de paroi intérieure du barillet de poignée (10) est pourvu d'une fente de limitation (120), ladite fente de limitation (120) correspondant au premier joint (14), et le premier joint (14) étant prévu dans la fente de limitation (120).

4. Dispositif de soin personnel selon la revendication 1, où la bague lumineuse supérieure (120) est pourvue d'un canal (122), ledit canal (122) est parallèle à un plan radial de la ligne d'extension principale et a une hauteur prédéfinie, la quatrième extrémité (22) s'étend hors de la première extrémité (102) à partir du canal (122) dans la direction de la ligne d'extension principale, la première bague d'étanchéité (30) fait saillie hors de la deuxième bague d'étanchéité (32) vers la première extrémité (102) et s'étend dans le canal (122), une surface de paroi intérieure d'une partie de la première bague d'étanchéité (30) s'étendant dans le canal (122) est pourvue de la deuxième protubérance (300).

5. Dispositif de soin personnel selon la revendication 1, où une surface de paroi extérieure de la deuxième bague d'étanchéité (32) est pourvue d'une troisième protubérance (320), et où la troisième protubérance (320) est en ajustement serré avec une périphérie de la bague lumineuse supérieure (12).

6. Dispositif de soin personnel selon la revendication 5, où un côté de la bague lumineuse supérieure (12) faisant face à la deuxième bague d'étanchéité (32) est pourvu d'une quatrième protubérance (124), et où la quatrième protubérance (124) est en ajustement serré avec une périphérie de la deuxième bague d'étanchéité (32).

7. Dispositif de soin personnel selon la revendication 6, où la deuxième bague d'étanchéité (32) comprend une première partie d'étanchéité (322) et une deuxième partie d'étanchéité (324), la première partie d'étanchéité (322) est raccordée à la première bague d'étanchéité (30) et s'étend dans une direction opposée à la première bague d'étanchéité (30), la deuxième partie d'étanchéité (324) est raccordée à une extrémité de la première partie d'étanchéité (322) distante de la première bague d'étanchéité (30) et s'étend vers la deuxième extrémité (104) du barillet de poignée (10), la troisième protubérance (320) entoure une surface de paroi extérieure de la deuxième partie d'étanchéité (324), et la quatrième protubérance (124) est en ajustement serré avec la première partie d'étanchéité (322).

8. Dispositif de soin personnel selon l'une des revendications 1 à 3, où au moins une partie du barillet de poignée (10) est prévue comme pièce métallique.
